# EUROPÄISCHE PATENTANMELDUNG

(11) **EP 0 722 698 A2**
(43) Veröffentlichungstag der Anmeldung: **24.07.1996**
(21) Anmeldenummer: 96100787.9
(22) Anmeldetag: 19.01.1996
(51) Int. Cl.: A61C 13/00

(54) **Verfahren und Vorrichtung zur sonoerosiven Herstellung eines individuellen Formteils**

(30) Priorität: 20.01.1995 DE 19501699
(71) Anmelder: THERA Patent GmbH & Co. KG Gesellschaft für industrielle Schutzrechte, D-82229 Seefeld (DE)
(72) Erfinder: Hahn, Rainer, Dr., D-72074 Tübingen (DE)
(74) Vertreter: Strehl Schübel-Hopf Groening & Partner

(57) **Zusammenfassung**

Die Erfindung betrifft ein Verfahren und eine Vorrichtung zur sonoerosiven Herstellung eines individuellen Formteils **12** mit mindestens einem Passungsabschnitt **26** in der Oberfläche zum formschlüssigen Passungseingriff mit einem konfektionierten Bauteil **16**, wobei neben mindestens einer individuell hergestellten Formsonotrode **44** zur Formung des Formteils eine konfektionierte Passungssonotrode **38** zur Erzeugung der erforderlichen Passungskontur verwendet wird. Hierdurch läßt sich auf einfache Weise eine paßgenaue Kopplung des Formteils mit dem konfektionierten Bauteil erreichen.

## Beschreibung

Die vorliegende Erfindung betrifft ein Verfahren und eine Vorrichtung zur sonoerosiven Herstellung eines individuellen Formteils mit mindestens einem Passungsabschnitt in der Oberfläche zum formschlüssigen Passungseingriff mit einem konfektionierten Bauteil.

Spezieller bezieht sich die Erfindung vornehmlich, aber nicht ausschließlich, auf die Herstellung von keramischen Zahnersatzteilen wie ein- oder mehrteilige Implantat-Suprakonstruktionen oder ähnliche Aufbauten, bei denen üblicherweise ein individuell gefertigtes Zahnersatzteil mit konfektionierten Verankerungselementen für die Befestigung im Kiefer bzw. an angrenzenden Zähnen verbunden werden soll. Unter dem Begriff "konfektioniertes" Bauteil wird im folgenden ein serienmäßig in verschiedenen Ausführungen bzw. Größen verfügbares Bauteil verstanden, wie dies beispielsweise in der Zahnmedizin im Kiefer einsetzbare Implantate sind.

Bei herkömmlichen Implantat-Superkonstruktionen wird häufig ein mit einer Bohrung und einem an dem im verankerten Zustand freiliegenden Ende angeformten Passungsabschnitt versehenes Implantat im Kiefer verankert. Der Passungsabschnitt ist im Querschnitt häufig ähnlich einer Sechskantmutter ausgebildet und dient dazu, die Suprakonstruktion lagegenau bezüglich der Längs- und Umfangsrichtung zur Bohrungsachse mit dem Implantat auszurichten. Hierzu ist es erforderlich, daß die kieferseitige Oberfläche der Suprakonstruktion eine zum Passungsabschnitt des Implantats korrespondierende Passungsfläche aufweist. Ferner ist die Suprakonstruktion oft mit einer Durchgangsbohrung versehen, durch die hindurch eine Befestigungsschraube zur Befestigung der Suprakonstruktion in die Implantat-Bohrung eingeschraubt werden kann.

Herkömmlicherweise werden Zahn-Suprakonstruktionen aus metallischen Werkstoffen konfektioniert oder gegossen. Wünschenswert wäre es, sie aus harten keramischen Werkstoffen zu bilden. Aus US-A-3 971 133, DE-A-3 928 684 und DE-A-4 342 078 ist es bekannt, keramische Zahnersatzteile mittels sonoerosiver Verfahren herzustellen, wobei es sich jedoch stets um Brücken- oder Kronenkonstruktionen handelt, die auf vorbearbeitete Zahnstümpfe aufgesetzt werden. Bei der Verbindung von Krone und individuell präpariertem Stumpf findet eine Fassung mit einer konfektionierten Fläche nicht statt.

Für die Herstellung der eingangs genannten Formteile wie Implantat-Suprakonstruktionen für das paßgenaue Zusammenwirken mit zugeordneten Bauteilen wie Implantaten sind die herkömmlichen sonoerosiven Verfahren nicht geeignet. Denn die Sonotroden unterliegen beim Bearbeitungsvorgang einem merklichen Verschleiß, der die Bearbeitungsgenauigkeit mit zunehmender Eindringtiefe ins Werkstück herabsetzt.

Daher liegt der Erfindung die Aufgabe zugrunde, ein Verfahren, eine Vorrichtung sowie eine Einrichtung zur sonoerosiven Herstellung eines individuellen Formteils mit mindestens einem Passungsabschnitt in der Oberfläche zum formschlüssigen Passungseingriff mit einem konfektionierten Bauteil anzugeben, wobei die hochgenaue Passung zwischen Formteil und konfektioniertem Bauteil sichergestellt sein soll.

Erfindungsgemäß wird diese Aufgabe durch die in den unabhängigen Ansprüchen angegebenen Merkmale gelöst.

Der Grundgedanke der Erfindung besteht darin, daß durch die Verwendung von konfektionierten Passungssonotroden, welche die Passungskontur des zu verbindenden Bauteils, insbesondere des Implantats, aufweisen, eine Bearbeitungssonotrode bereitgestellt wird, mittels der zusätzlich zu der Bearbeitung der restlichen Flächen durch die individuell geformten Formsonotroden die getrennte sonoerosive Bearbeitung des Passungsabschnitts des zu bildenden Formteils erfolgen kann. Diese Bearbeitung der Passungsfläche mittels der konfektionierten Passungssonotrode führt zu einer wesentlich genaueren Formgebung des relevanten Passungsabschnitts als bei Bearbeitung durch die individuell gefertigte Formsonotrode. Denn bei der Herstellung der individuellen Formsonotrode sind eine Reihe von aufeinanderfolgenden Abformvorgängen erforderlich, um aus dem vom Zahnarzt im Patientenmund angefertigten ersten Abdruck die endgültige Formsonotrode zu erhalten, wobei jeder Abformvorgang zwangsläufig mit Abbildungsfehlern verbunden ist. Diese Addition der Abbildungsfehler wirkt sich zwar bei der äußeren Formgebung nicht oder nur sehr gering aus, bei der Passungsfläche hingegen können bereits kleine Ungenauigkeiten große Lageverschiebungen hervorrufen.

Insgesamt läßt sich eine genauere Formgebung des Bearbeitungsabschnitts bei konfektioniert hergestellten Sonotroden gegenüber durch Abformung gebildeten Sonotroden erzielen, da eine Serienfertigung mit automatisierten Werkzeugmaschinen und Meßeinrichtungen durchgeführt werden kann.

Schließlich ist es möglich, gezielt bestimmte Übermaße der Passungssonotroden einzustellen, um die Verschleißabweichungen dadurch noch geringer zu halten, so daß das Übermaß etwa dem bei der Bearbeitung auftretenden Verschleiß entspricht. Ebenso können die passungsrelevanten Flächen der Passungssonotrode gezielt untermaßig hergestellt werden, um so den durch die verwendete Schleifmittelsuspension verursachten Arbeitsspalt zu kompensieren.

Grundsätzlich kann entweder die individuell hergestellte Formsonotrode oder die konfektionierte Passungssonotrode für den ersten Bearbeitungsschritt herangezogen werden. In der Praxis hat es sich als zweckmäßig erwiesen, zuerst die Formgebung des Passungsabschnitts mittels der Passungssonotrode auszuführen, da der entsprechende Abschnitt der Formsonotrode durch die mehrfache Abformung ein gewisses Untermaß aufweist und daher mit dem bereits geformten Passungsabschnitt normalerweise überhaupt nicht mehr in Eingriff gelangt.

Es sei betont, daß die Erfindung zur maßgenauen Formgebung einer Vielzahl von Passungsflächen bei Zahnersatzteilen verwendet werden kann. So kommen neben der Anpassung an Implantate die Formung von Passungsflächen für Geschiebeteile oder genaue Durchgangsbohrungen für Befestigungsstifte und - schrauben in Frage.

Die Erfindung wird nachfolgend anhand bevorzugter Ausführungsformen unter Bezugnahme auf die beigefügten Zeichnungen weiter erläutert. Dabei zeigt:
- Figur 1: einen schematischen Schnitt durch einen Kiefer mit eingesetzter Implantat-Suprakonstruktion,
- Figur 2: einen ersten Bearbeitungsschritt bei der Herstellung einer Konstruktion nach Figur 1,
- Figuren 3 und 4: einen zweiten und einen dritten Bearbeitungsschritt,
- Figuren 5(a) und 5(b): eine Draufsicht und eine Seitenansicht einer Geschiebe-Passungsfläche für ein Zahnersatzteil, und
- Figur 6: eine Schnittansicht einer Zahnkrone mit Befestigungsstiften.

In der nachfolgenden Beschreibung wird die Erfindung unter Bezugnahme auf den bevorzugten Bereich der Dentalrestaurationen erläutert. Dies ist jedoch nicht als Beschränkung aufzufassen, denn in gleicher oder analoger Weise ist die Erfindung in vielen anderen technischen Bereichen einsetzbar.

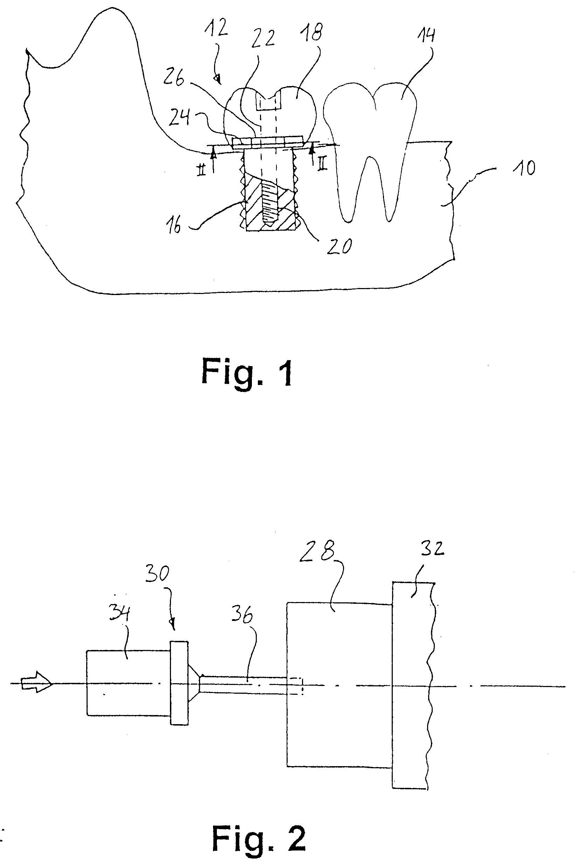

In Figur 1 ist schematisch ein Ausschnitt eines Unterkiefers **10** dargestellt, der eine Implantat-Suprakonstruktion **12** aufweist. Zu Veranschaulichungszwecken ist neben dieser ein natürlicher Zahn **14** dargestellt. Die Implantat-Suprakonstruktion **12** besteht im wesentlichen aus einem Implantat **16** und einer daran befestigten Suprakonstruktion **18** als Nachbildung eines natürlichen Zahnes.

Das Implantat **16** ist etwa zylindrisch ausgebildet und weist an seiner Zylindermantelfläche eine geeignete Oberflächenstruktur auf, um eine Verankerung im Kiefer **10** zu erleichtern. Die Oberflächenstruktur ist als Außengewinde dargestellt; in gleicher Weise können jedoch auch andere Formen und Strukturen wie Ein- oder Ausbuchtungen vorgesehen werden. Derartige Implantate sind im Stand der Technik bekannt.

Im Innern des Implantats **16** ist eine zur freien Seite hin offene Axialbohrung **20** mit Innengewinde eingelassen, die zur Aufnahme einer nicht dargestellten Befestigungsschraube dient. Hierzu weist die Suprakonstruktion **18** ebenfalls eine mit der Bohrung **20** axial fluchtende Durchgangsbohrung **22** auf. Durch Anziehen der Befestigungsschraube wird die Suprakonstruktion **18** am Implantat **16** befestigt. Falls gewünscht, kann der Schraubenkopf mittels geeigneter Dentalzemente überdeckt werden.

Bei derartigen Implantat-Suprakonstruktionen **12** ist es wichtig, daß das fertige Zahnersatzteil, also die Suprakonstruktion **18**, bezüglich des Implantats **16** genau so ausgerichtet ist, wie vom Zahntechniker bei der Modellierung des Zahnersatzteils vorgesehen.

Um dies sicherzustellen, ist zwischen Implantat **16** und Suprakonstruktion **18** ein formschlüssiger Verbindungsabschnitt vorgesehen, insbesondere um Winkelabweichungen in Längs- und Umfangsrichtung bezüglich der Befestigungsschraubenachse zu verhindern. Dieser Verbindungsabschnitt besteht aus einem geeignet geformten Ansatz **24**, der am freien Ende des Implantats **16** angeformt ist. Die Suprakonstruktion **18** weist einen dazu komplementären Passungsabschnitt **26** auf, so daß die Suprakonstruktion **18** paßgenau auf das Implantat **16** aufgesetzt und anschließend festgeschraubt werden kann.

Der Ansatz **24** und der Verbindungsabschnitt **26** können im Querschnitt eckig, z.B. drei- , vier- sechs- oder achteckig sein, wobei die bei Schraubenmuttern übliche Sechseckform bevorzugt ist. Auch andere, von der Kreisform abweichende Gestaltungen sind anwendbar. Falls bewußt ein Drehversatz um die Befestigungslängsachse zugelassen und nur ein Kippversatz vermieden werden soll, kann auch eine kreisrunde Kontur gewählt werden.

Nachfolgend wird ein Verfahren zur Herstellung einer erfindungsgemäßen Implantat-Suprakonstruktion **12** erläutert.

Zunächst wird vom Zahnarzt nach Entfernen des zu ersetzenden Zahnes und chirurgischer Freilegung des Kieferknochens das Implantat **16** im Kiefer **10** eingesetzt. Unmittelbar nach Eingliederung oder nach erfolgter Einheilung und gegebenenfalls chirurgischer Freilegung des Ansatzes **24** des Implantats wird die Kiefersituation konventionell abgeformt. Um die genaue Lage des Implantats **16** in den Abdruck zu übernehmen, wird vorzugsweise vorher ein Stifteinsatz in die Gewindebohrung **20** des Implantats **16** eingesetzt, der ein gutes Stück über das Implantat herausragt. Der Stifteinsatz ist durchsetzt eine Hülse mit einer inneren Paßfläche, die exakt in Formeingriff mit dem Ansatz **24** des Implantats **16** justiert werden kann.

Anschließend wird aus einem Modellmaterial, vorzugsweise Gips, ein Positivmodell der Kiefersituation gebildet, das am Boden der durch die Restauration zu füllenden Zahnlücke eine Abbildung des Implantatansatzes **24** mit der durch die Hülse des Stifteinsatzes erzeugte Paßkontur aufweist. Ferner umfaßt das Positivmodell ein etwa hülsenförmiges Modellimplantat, das durch seine Justierung an der im Abdruck fixierten Hülse vor der Herstellung des Positivmodells vorzugsweise durch Ausgießen des Abdrucks etwa mit Gipsmasse in der gleichen Lage, Längs- sowie Umfangsorientierung im Positivmodell angeordnet ist wie das Implantat **16** im Kieferknochen **10**.

Um die freiliegende Fläche des Modellimplantats, insbesondere um dessen Ansatz, herum formt der Zahntechniker aus einem plastischen und erhärtenden Werkstoff anschließend ein Modell der Suprakonstruktion, also des zu formenden Zahnersatzteils, oder eines Teil davon.

Nach dem Abnehmen und Aushärten des Zahnersatzmodells werden die beiden Formsonotroden für die beidseitige sonoerosive Herausarbeitung der Suprakonstruktion geformt. Dazu wird zunächst die spätere Bearbeitungslängsachse definiert, die fluchtend mit der Achse des Stifteinsatzes festgelegt wird. Anschließend wird das Zahnersatzmodell auf ein Ausrichtteil aufgesteckt, das die Form des Implantatansatzes **24** und des in die Gewindebohrung **20** eingesteckten Stifteinsatzes aufweist. Besondere Sorgfalt gilt der parallelen Ausrichtung des Stifteinsatzes zur Bearbeitungslängsachse. Danach wird der Äquatorialverlauf des Zahnersatzmodells bezogen auf die Bearbeitungslängsachse bestimmt und mittels herkömmlicher Techniken, wie sie beispielsweise in den oben erwähnten Druckschriften beschrieben sind, die okklusale Formsonotrode gebildet. Ebenfalls auf bekannte Weise wird anschließend die das Werkstück von der Kieferseite bearbeitende Gegensonotrode hergestellt.

Nun beginnt der eigentliche Herstellungsvorgang für die Suprakonstruktion **18**, der in den Figuren 2 bis 4 näher dargestellt ist.

Wie in Figur 2 dargestellt, wird ein Werkstück **28** geeigneter Größe, vorzugsweise ein unbearbeiteter Keramikblock, mittels einer Stiftsonotrode **30** zur Ausbildung der Durchgangsbohrung **22** (Figur 1) für die in das Gewindebohrung **20** des Implantats **16** eingreifende Verbindungsschraube sonoerosiv bearbeitet.

Zur Vereinfachung der zeichnerischen Darstellung sind in den Figuren 2 bis 4 der mit der jeweiligen Sonotrode gekoppelte Ultraschallgenerator sowie die zugeordneten Führungen und Halterungen außer dem Anschlag **32** nicht dargestellt.

Die Stiftsonotrode **30** umfaßt einen mit dem Ultraschallgenerator verbundenen Sonotrodenschaft **34** und einen Bearbeitungszylinder **36**, der etwa den gleichen Durchmesser aufweist wie die in der Gewindebohrung **20** verankerbare Schraube. Die Stiftsonotrode **30** wird dann gegen das Werkstück **28** verfahren, bis das so gebildete Loch eine ausreichende Tiefe zur Bildung der Durchgangsbohrung **22** im fertigen Zahnersatzteil **12** aufweist.

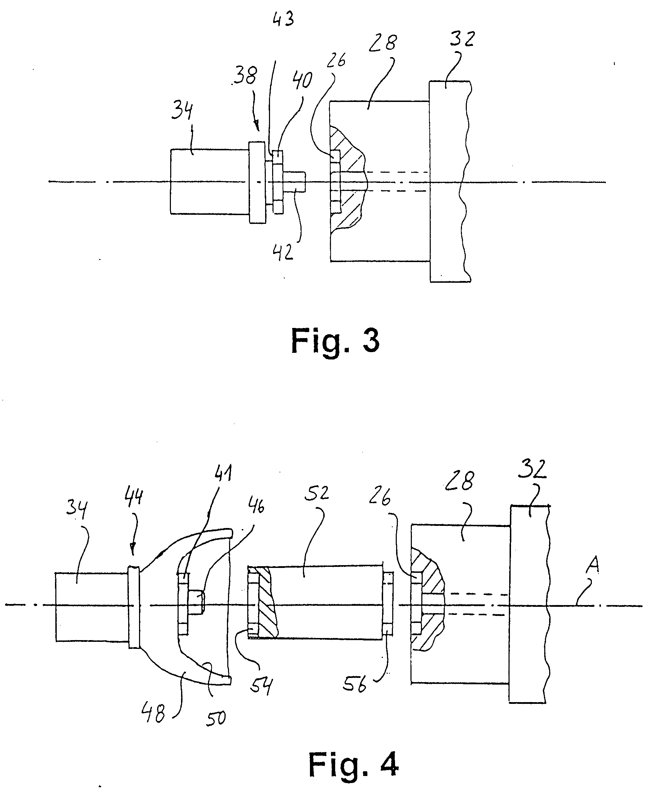

Nach Fertigstellung der Durchgangsbohrung **22** wird die Stiftsonotrode **30** durch eine Passungssonotrode **38** ersetzt, was in Figur 3 dargestellt ist. Diese Passungssonotrode **38** ist nicht individuell angefertigt worden, sondern ein Serienbauteil. Es umfaßt neben einem Sonotrodenschaft **34** einen Bearbeitungsabschnitt **40**, der die gleiche Kontur wie der Paßansatz **24** des Implantats **16** aufweist. Ferner ist vor dem Bearbeitungsabschnitt **40** ein Zentrieransatz **42** angeformt, der in die im Werkstück **28** eingearbeitete Durchgangsbohrung **22** paßt und einen zentrierten Verschub des zu dem Implantatansatz **24** komplementären Passungsabschnitts **26** in das Werkstück **28** ermöglicht. Der Zentrieransatz hat sich aus der praktischen Anwendung bewährt, ist jedoch nicht unbedingt erforderlich. Während dieses Bearbeitungsvorgangs unterliegt die Passungssonotrode **38** und insbesondere der Bearbeitungsabschnitt **40** einem gewissen Verschleiß, der bei richtiger Bemaßung des Bearbeitungsabschnitts etwa durch den durch das Schleifmittel verursachten Arbeitsspalt kompensiert wird, so daß eine exakte und paßgenaue Ausbildung des Passungsabschnitts **26**, mithin des Gegenstücks zum Implantatansatz **24**, durchgeführt werden kann.

Anschließend wird die Passungssonotrode **38** durch die in Figur 4 gezeigte kieferseitige Formsonotrode **44** ersetzt. Diese Formsonotrode **44** weist ein Abbild **41** des Implantatansatzes **24** sowie einen davor geformten Zentriervorsprung **46** auf, der im wesentlichen die gleiche Aufgabe hat wie der Zentrieransatz **42** der Passungssonotrode **38**. Ferner hat die Formsonotrode einen glockenartigen Mantelabschnitt **48**, dessen Innenfläche **50** eine Negativform eines Teils des vom Zahntechniker gebildeten Zahnersatzmodells darstellt.

Um eine positionsgenaue Ausrichtung der Formsonotrode **44** zu ermöglichen, wird vorzugsweise ein Paßadapter **52** für die Durchführung des Justiervorgangs, insbesondere bezüglich der Winkelposition zwischen Werkstück **28** und Formsonotrode **44** eingesetzt. Der Paßadapter **52** weist an seinen gegenüberliegenden Stirnseiten die Positivform **56** und die Negativform **54** des Passungsabschnitts **26** auf, die beide zueinander in Umfangsrichtung bezüglich der Bearbeitungslängsachse A gleich ausgerichtet sind, so daß der Ansatz **41** der Formsonotrode **44** zu dem vorgearbeiteten Passungsabschnitt **26** des Werkstücks **28** ausgerichtet ist.

Nach Beendigung der Einjustierung der Formsonotrode **44** wird der Paßadapter **52** entfernt und die Formsonotrode unter Einleitung von Ultraschall in den Sonotrodenschaft **34** soweit in das Werkstück verfahren, bis alle mit dem Werkzeug zu fertigenden Flächen des Werkstücks **28** herausgearbeitet sind.

Eine Bearbeitung des Passungsabschnitts **26** durch den Ansatz **41** der Formsonotrode **44** erfolgt vorzugsweise nicht. Bei der Bearbeitung des Werkstücks **28** durch die Innenfläche **50** der Formsonotrode **44** greift der Ansatz **41** formgerecht in die durch den Bearbeitungsabschnitt **40** der Passungssonotrode herausgearbeitete Form. Das Ende dieses Bearbeitungsschrittes ist dann erreicht, wenn der Ansatz **41** der Formsonotrode **44** vollständig in den Passungsabschnitt **26** des Werkstücks **28** eintaucht.

Der Ansatz **41** der Formsonotrode **44** ist bei deren Herstellung über mehrere Abformschritte in seiner Genauigkeit limitiert und insbesondere an den Kanten des Vielecks zu klein ausgebildet oder verrundet. Je nach dieser Genauigkeit wird der Passungsabschnitt **26** beim Einsenken der Formsonotrode **44** durch den Ansatz **41** mehr oder weniger bearbeitet.

Aufgrund der zusätzlich notwendigen Berücksichtigung des Arbeitsspaltes bei der sonoerosiven Bearbeitung hat es sich ferner bewährt, für die Bearbeitung des Werkstücks **28** mit der Passungssonotrode **38** und der Formsonotrode **44** dieselbe Schleifmittelaufschlämmung zu verwenden.

Es ist dabei möglich, die Bearbeitung durch die Formsonotrode in mehrere Teilschritte aufzuteilen. Insbesondere können auch zwei identische Formsonotroden verwendet werden, die die gewünschte Form durch aufeinanderfolgendes Einsenken beider Sonotroden im Sinne einer Schrupp- und Schlichtbearbeitung erzeugen. Bei der Schlichtbearbeitung wird dabei eine neue Formsonotrode **44** verwendet, welche bis zur vollständigen Bearbeitung der kieferseitigen Form der Implantat-Suprakonstruktion **12** nur wenig Volumen des Werkstücks **28** zerspant. Ferner können sich der oben beschriebenen Bearbeitung im Stand der Technik bekannte Verfahrensschritte zur Fertigbearbeitung des Werkstücks **28** von der bearbeiteten Seite anschließen.

Anschließend wird mittels herkömmlicher Bearbeitungsschritte eine Fertigbearbeitung des Werkstücks **28** von der okklusalen Seite mittels einer zweiten Formsonotrode durchgeführt. Kurz gesagt wird hierzu die aus Werkstück **28** und im Eingriff befindlicher Formsonotrode **44** gebildete Einheit vom Ultraschallgenerator getrennt und mit dem Anschlag **32** verbunden, während die Gegensonotrode mit dem Ultraschallgenerator verbunden und zu der ersten Formsonotrode **44** ausgerichtet wird. Danach erfolgt die Fertigbearbeitung des Werkstücks **28** von der Okklusalseite her.

Gemäß einer zweiten Ausführungsform des erfindungsgemäßen Bearbeitungsverfahrens kann die erste, grobe Bearbeitung des werkstückseitigen Passungsabschnitts **26** auch mittels der individuell gefertigten Formsonotrode **44** erfolgen, dem sich als zweiter Bearbeitungsschritt die Sonoerosion mittels der nicht individuell gefertigten Passungssonotrode **38** anschließt. Bei dieser Ausführungsform der Erfindung würde also der Bearbeitungsschritt nach Figur 4 vor dem nach Figur 3 erfolgen. In diesem Fall sind die Kantenlängen des Vielecks **56** am Paßadapter **52** bezüglich ihrer Länge unterzudimensionieren, damit der Paßadapter **52** in der durch Einsenken des Ansatzes **41** der Formsonotrode **44** erzeugten Vorform des späteren Passungsabschnitts **26** einjustiert werden kann.

Die Implantate **26** sind zur Anpassung an unterschiedliche Kiefergrößen im Handel in verschiedenen Größen konfektioniert. Dementsprechend sind die Maße der Implantatansätze **24** auch unterschiedlich. Erfindungsgemäß wird daher ein an die erhältlichen Implantatmaße angepaßtes Sortiment an Passungssonotroden **38** bereitgestellt, die zur genaueren und schnelleren Fertigung von gattungsgemäßen Zahnersatzteilen verwendet werden können.

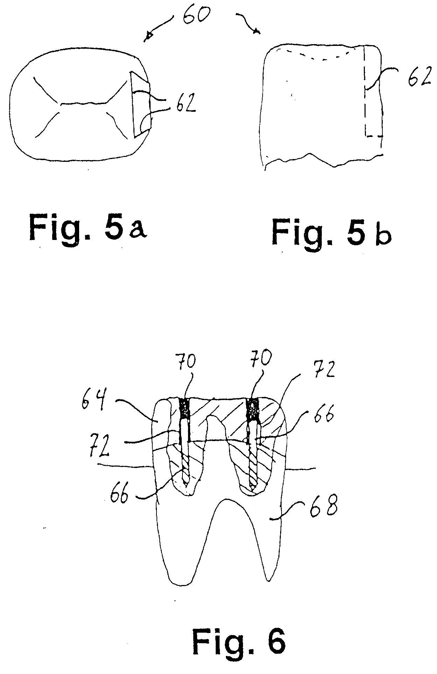

In den Figuren 5(a) und 5(b) sind in Draufsicht und Seitenansicht ein Zahn **60** mit einer ebenfalls mittels der Erfindung herstellbaren Passungsfläche **62** dargestellt. Die Passungsfläche **62** hat eine etwa schwalbenschwanzartige Form und dient dazu, ein nicht dargestelltes Geschiebeteil von oben einzuschieben. Dabei kommt es ebenfalls darauf an, daß die Passungsflächen **62** möglichst genau gearbeitet sind.

In Figur 6 ist in einer schematischen teilgeschnittenen Seitenansicht eine Krone **64** dargestellt, die unter anderem mittels Befestigungsstiften **66** an einem Zahnstumpf **68** befestigt ist, wobei die Befestigungsstiften **66** mittels Glaslot **70** o.ä. an der Krone **64** angelötet sind. Auf sonoerosivem Wege werden dabei die Durchgangsbohrungen **72** für die Befestigungsstifte **66** gefertigt, wobei die erfindungsgemäßen Passungssonotroden verwendet werden, um eine hochgenaue Ausrichtung der Bohrungen **72** sicherzustellen.

## Patentansprüche

1. Verfahren zur sonoerosiven Herstellung eines individuellen Formteils (**12**) mit mindestens einem Passungsabschnitt (**26**) in der Oberfläche zum formschlüssigen Passungseingriff mit einem konfektionierten Bauteil (**16**), wobei zur Formung des Passungsabschnitts (**26**) eine konfektionierte Passungssonotrode (**38**) mit der erforderlichen Passungskontur verwendet wird und mindestens eine für das Formteil individuell hergestellte Formsonotrode (**44**) für die übrige Bearbeitung des Formteils (**26**) aus einem Rohling verwendet wird.

2. Verfahren nach Anspruch 1, dadurch gekennzeichnet, daß ein Werkstück (**28**) im Bereich des zu bildenden Passungsabschnitts (**26**) in einem ersten Bearbeitungsschritt mit der Passungssonotrode (**38**) und in einem darauffolgenden zweiten Bearbeitungsschritt mit der Formsonotrode (**44**) bearbeitet wird.

3. Verfahren nach Anspruch 2, dadurch gekennzeichnet, daß zur genauen Ausrichtung der im zweiten Bearbeitungsschritt verwendeten Sonotrode (**38**, **44**) zum vorgearbeiteten Passungsabschnitt (**26**) ein Paßadapter (**52**) zwischen Passungsabschnitt (**26**) des Werkstücks (**28**) und zweite Sonotrode (**38**, **44**) eingesetzt wird, wobei dieser an seinen gegenüberliegenden Enden jeweils eine Positiv- und eine Negativform (**54**, **56**) des Passungsabschnitts (**26**) aufweist.

4. Verfahren nach einem der vorhergehenden Ansprüche, dadurch gekennzeichnet, daß anstelle der einen Passungssonotrode (**38**) eine Vorbearbeitungs- und eine Feinbearbeitungs-Passungssonotrode verwendet wird, die nacheinander eingesetzt werden.

5. Verfahren nach einem der vorhergehenden Ansprüche, dadurch gekennzeichnet, daß der Passungsabschnitt (**26**) einen nicht-kreisförmigen, vorzugsweise sechseckigen, Querschnitt hat.

6. Verfahren nach einem der vorhergehenden Ansprüche, dadurch gekennzeichnet, daß es zur Fertigung eines keramischen Zahnersatzteils verwendet wird.

7. Verfahren nach Anspruch 6, dadurch gekennzeichnet, daß es zur Fertigung einer Implantat-Suprakonstruktion (**12**) verwendet wird, wobei das konfektionierte Bauteil ein Kieferimplantat (**16**) ist, dessen freies Ende als Gegenstück zum Passungsabschnitt (**26**) der Implantat-Suprakonstruktion (**12**) ausgebildet ist.

8. Verfahren nach Anspruch 7, dadurch gekennzeichnet, daß es die folgenden Verfahrensschritte umfaßt:
(a) Erstellen eines Modells der zu bildenden Implantat-Suprakonstruktion (**12**) auf der Basis eines mittels eines Kieferabdrucks bei eingesetztem Implantat (**16**) abgeformten Kiefermodells,
(b) Abformen des Modells zur Bildung zweier, ein Werkstück von zwei gegenüberliegenden Seiten bearbeitender Formsonotroden (**44**),
(c) sonoerosives Einarbeiten einer Axialbohrung (**22**) in einen Keramikrohling (**28**) mittels einer Stiftsonotrode (**30**),
(d) Ausrichten einer mit einem frontseitigen Zentrieransatz (**42**) versehenen Passungssonotrode (**38**) koaxial zu der im Werkstück (**28**) gebildeten Axialbohrung (**22**) und Herausarbeiten des Passungsabschnitts (**26**) im Werkstück (**28**),
(e) Einsetzen eines Paßadapters (**52**) in den gebildeten Passungsabschnitt (**26**) und Ausrichten einer kieferseitigen Formsonotrode (**44**) durch Formeingriff mit dem zweiten Ende des Paßadapters (**52**), anschließende Bearbeitung der kieferseitigen Werkstückseite durch die Formsonotrode (**44**),
(f) Fertigbearbeitung des Werkstücks (**28**) von der gegenüberliegenden Werkstückseite mittels der zweiten Formsonotrode.

9. Vorrichtung zur sonoerosiven Herstellung eines individuellen Formteils (**12**) mit mindestens einem Passungsabschnitt (**26**) in der Oberfläche zum formschlüssigen Passungseingriff mit einem konfektionierten Bauteil (**16**), umfassend mindestens eine individuell hergestellte Formsonotrode (**44**) sowie eine konfektionierte Passungssonotrode (**38**) mit der erforderlichen Passungskontur (**24**), sowie eine Halterung zum aufeinanderfolgenden Halten beider Sonotroden (**38**, **44**), um das Formteil mit dem Passungsabschnitt durch beide Sonotroden (**38**, **44**) aus einem Werkstück (**28**) herauszuarbeiten.

10. Vorrichtung nach Anspruch 9, dadurch gekennzeichnet, daß sie einen Paßadapter (**52**) zum Einsetzen zwischen den Passungsabschnitt (**26**) des Werkstücks (**28**) und die zweite Sonotrode (**38**, **44**) für die Ausrichtung der zweiten Sonotrode umfaßt, wobei dieser an seinen gegenüberliegenden Enden jeweils eine Positiv- und eine Negativform (**54**, **56**) des Passungsabschnitts (**26**) aufweist.

11. Vorrichtung für die sonoerosive Herstellung einer dentalen Implantat-Suprakonstruktion (**12**) mit mindestens einem Passungsabschnitt (**26**) in der Oberfläche zum formschlüssigen Passungseingriff mit einem kieferseitigen Implantat (**16**), umfassend konfektionierte Sätze jeweils bestehend aus einem Implantat (**16**) mit eingearbeitetem Passungsabschnitt (**24**) im Bereich der freien Stirnseite sowie einer zugeordneten Passungssonotrode (**38**) mit identisch geformtem Passungsabschnitt.
